# EUROPÄISCHE PATENTSCHRIFT

(11) **EP 1 919 654 B1**
(45) Veröffentlichungstag und Bekanntmachung des Hinweises auf die Patenterteilung: **06.04.2011**
(21) Anmeldenummer: 06792868.9
(22) Anmeldetag: 17.08.2006
(51) Int. Cl.: B23P 15/00, H01F 41/02, H01F 7/08, F02M 51/06, F02M 61/16, F16K 31/06, B60T 8/36

(54) **VERFAHREN ZUR HERSTELLUNG EINES FESTEN GEHÄUSES**
RIGID HOUSING PRODUCTION METHOD
PROCÉDÉ POUR PRODUIRE UN BOÎTIER RIGIDE

(30) Priorität: 22.08.2005 DE 102005039554
(43) Veröffentlichungstag der Anmeldung: 14.05.2008
(73) Patentinhaber: ROBERT BOSCH GMBH, 70442 Stuttgart (DE)
(72) Erfinder: SEITTER, Max, 75417 Muehlacker (DE); GRANER, Juergen, 74372 Sersheim (DE); OETINGER, Stefan, 96264 Altenkunstadt (DE)
(86) Internationale Anmeldenummer: PCT/EP2006/065390
(87) Internationale Veröffentlichungsnummer: WO 2007/023125

(56) Entgegenhaltungen:
- EP-A2- 1 347 170
- WO-A-2005/061150
- DE-A1- 3 502 287
- DE-A1- 10 031 686
- DE-C2- 4 237 405
- JP-A- 5 164 013
- JP-A- 7 103 354
- JP-A- 2001 329 928
- JP-A- 2005 201 139
- US-A1- 2003 184 422

## Beschreibung

### Stand der Technik

Die Erfindung geht aus von einem Verfahren zur Herstellung eines festen Gehäuses nach der Gattung des Hauptanspruchs.

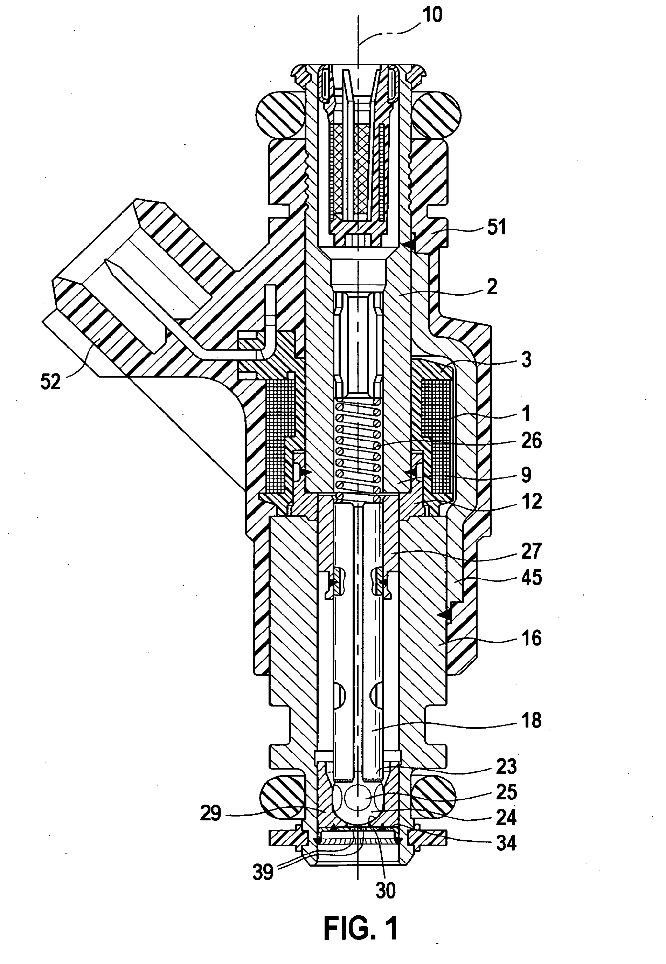

In der Figur 1 ist ein bekanntes Brennstoffeinspritzventil aus dem Stand der Technik dargestellt, das einen klassischen dreiteiligen Aufbau eines inneren metallenen Strömungsführungsteils und zugleich Gehäusebauteils besitzt. Dieses innere Ventilrohr wird aus einem einen Innenpol bildenden Einlassstutzen, einem nichtmagnetischen Zwischenteil und einem einen Ventilsitz aufnehmenden Ventilsitzträger gebildet und in der Beschreibung zu Figur 1 näher erläutert.

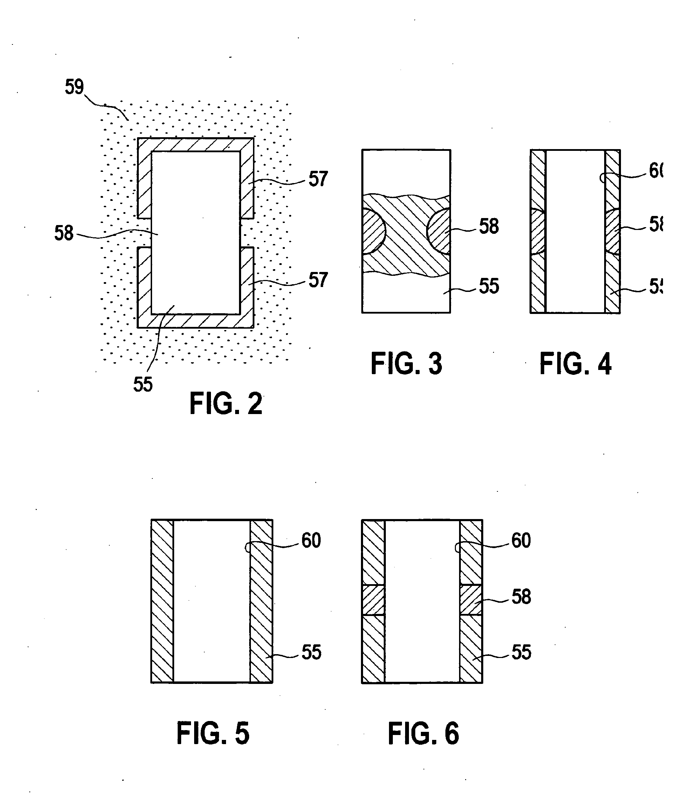

Aus der DE 35 02 287 A1 ist bereits ein Verfahren zur Herstellung eines hohlzylindrischen metallenen Gehäuses mit zwei magnetisierbaren Gehäuseteilen und einer dazwischen liegenden, die Gehäuseteile magnetisch trennenden, amagnetischen Gehäusezone bekannt. Dieses metallene Gehäuse wird dabei aus einem magnetisierbaren Rohling einstückig bis auf ein Übermaß im Außendurchmesser vorbearbeitet, wobei in der Innenwand des Gehäuses in der Breite der gewünschten mittleren Gehäusezone eine Ringnut eingestochen wird. Bei rotierendem Gehäuse wird ein nichtmagnetisierbares Füllmaterial in die Ringnut unter Erwärmung des Ringnutbereichs gefüllt und die Rotation des Gehäuses bis zur Erstarrung des Füllmaterials aufrechterhalten. Anschließend wird das Gehäuse außen bis auf das Endmaß des Außendurchmessers überdreht, so dass keine Verbindung mehr zwischen den magnetisierbaren Gehäuseteilen besteht. Ein derart hergestelltes Ventilgehäuse kann z.B. in Magnetventilen für Antiblockiersysteme (ABS) von Kraftfahrzeugen zum Einsatz kommen. Bekannt sind des weiteren aus der DE 42 37 405 C2 Verfahren zur Herstellung eines festen Kerns für Einspritzventile für Brennkraftmaschinen (Figur 5 des Dokuments). Die Verfahren zeichnen sich dadurch aus, dass unmittelbar oder über vorherige Umwandlungsprozesse ein einteiliges hülsenförmiges, magnetisches, martensitisches Werkstück bereitgestellt wird, das eine örtliche Wärmebehandlung in einem mittleren Abschnitt des magnetischen, martensitischen Werkstücks zur Umwandlung dieses mittleren Abschnitts in einen nichtmagnetischen, austenitischen mittleren Abschnitt erfährt. Alternativ werden bei der örtlichen Wärmebehandlung mittels Laser geschmolzenes Austenit bzw. geschmolzenes Ferrit bildende Elemente an den Ort der Wärmebehandlung zur Bildung eines nichtmagnetischen, austenitischen mittleren Abschnitts des festen Kerns hinzugefügt.

Aus der JP 2001-329928 A ist bereits ein Brennstoffeinspritzventil in Form eines elektromagnetisch betätigbaren Ventils bekannt, das eine dünnwandige Ventilhülse als festes Gehäuse aufweist, in dem u.a. ein Innenpol sowie ein axial bewegliches Ventilglied in Form einer Ventilnadel mit einem Ventilschließkörper und einem Magnetanker angeordnet sind. Umgeben wird die Ventilhülse von einer Magnetspule und einem äußeren Magnetkreisbauteil. Die Ventilhülse ist dabei aus einem ferromagnetischen Material hergestellt. Um die Magnetkreislinien bei erregter Magnetspule vom äußeren Magnetkreisbauteil in den Magnetanker leiten zu können unter Vermeidung eines magnetischen Kurzschlusses und optimaler Anzugskraft, ist die Ventilhülse in einem mittleren Bereich auf Höhe des Arbeitsluftspalts zwischen dem Innenpol und dem Magnetanker in ihren Magneteigenschaften verändert. Der vorerst magnetische Bereich wird in seinen magnetischen Eigenschaften in der Weise herabgesetzt, dass die Oberfläche durch Aufkohlen und/oder Aufsticken behandelt wird.

### Vorteile der Erfindung

Das erfindungsgemäße Verfahren zur Herstellung eines festen Gehäuses mit den kennzeichnenden Merkmalen des Hauptanspruchs hat den Vorteil, dass auf besonders einfache und kostengünstige Art und Weise Gehäuse mit einer magnetischen Trennung großserientechnisch zuverlässig herstellbar sind.

Insbesondere ist durch die Einfachheit der Einzelbauteile nur ein gegenüber den bekannten Herstellungsverfahren herabgesetzter Aufwand an Spezialwerkzeugen notwendig.

Von Vorteil ist es zudem, dass eine hohe Flexibilität in der Ausgestaltung der Geometrie des Gehäuses selbst, wie z.B. bei Länge, Außendurchmesser, Abstufungen ermöglicht ist.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, das Aufkohlen und/oder Aufsticken des wenigstens einen Teilbereichs des Grundkörpers in einer C- bzw. N-haltigen Umgebung stattfinden zu lassen, wobei die entsprechende Wärmebehandlung bei hohen Temperaturen oder plasmainduziert vorgenommen wird, um das Diffundieren der Kohlenstoff- bzw. Stickstoffmoleküle in der Randschicht des Grundkörpers zu ermöglichen.

### Zeichnung

Ausführungsbeispiele der Erfindung sind in der Zeichnung vereinfacht dargestellt und in der nachfolgenden Beschreibung näher erläutert. Es zeigen Figur 1 ein Brennstoffeinspritzventil gemäß dem Stand der Technik mit einem dreiteiligen inneren metallenen Ventilrohr als Gehäuse, Figuren 2-6 ein Beispiel eines Herstellungsverfahrens eines festen Gehäuses und Figuren 7 bis 9 schematisch Verfahrensschritte eines erfindungsgemäßen Verfahrens zur Herstellung eines festen Gehäuses und Figur 10 einen schematischen Ausschnitt aus einem Einspritzventil mit einem erfindungsgemäß hergestellten Gehäuse.

### Beschreibung der Ausführungsbeispiele

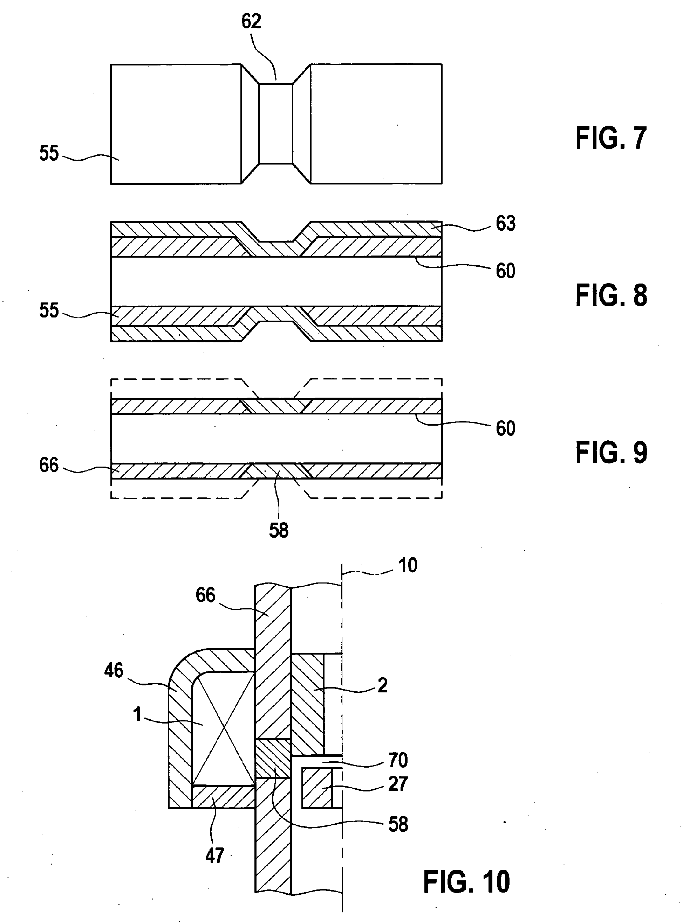

Bevor anhand der Figuren 7 bis 9 die erfindungsgemäßen Verfahrensschritte des Verfahrens zur Herstellung eines festen Gehäuses beschrieben werden, soll anhand von Figur 1 ein Brennstoffeinspritzventil des Standes der Technik als ein mögliches Einsatzprodukt für ein erfindungsgemäß hergestelltes Gehäuse näher erläutert werden.

Das in der Figur 1 beispielsweise dargestellte elektromagnetisch betätigbare Ventil in der Form eines Einspritzventils für Brennstoffeinspritzanlagen von gemischverdichtenden, fremdgezündeten Brennkraftmaschinen hat einen von einer Magnetspule 1 umgebenen, als Brennstoffeinlassstutzen und Innenpol dienenden rohrförmigen Kern 2, der beispielsweise über seine gesamte Länge einen konstanten Außendurchmesser aufweist. Ein in radialer Richtung gestufter Spulenkörper 3 nimmt eine Bewicklung der Magnetspule 1 auf und ermöglicht in Verbindung mit dem Kern 2 einen kompakten Aufbau des Einspritzventils im Bereich der Magnetspule 1.

Mit einem unteren Kernende 9 des Kerns 2 ist konzentrisch zu einer Ventillängsachse 10 dicht ein rohrförmiges metallenes nichtmagnetisches Zwischenteil 12 durch Schweißen verbunden und umgibt das Kernende 9 teilweise axial. Stromabwärts des Spulenkörpers 3 und des Zwischenteils 12 erstreckt sich ein rohrförmiger Ventilsitzträger 16, der fest mit dem Zwischenteil 12 verbunden ist. In dem Ventilsitzträger 16 ist eine axial bewegbare Ventilnadel 18 angeordnet. Am stromabwärtigen Ende 23 der Ventilnadel 18 ist ein kugelförmiger Ventilschließkörper 24 vorgesehen, an dessen Umfang beispielsweise fünf Abflachungen 25 zum Vorbeiströmen des Brennstoffs vorgesehen sind.

Die Betätigung des Einspritzventils erfolgt in bekannter Weise elektromagnetisch. Zur axialen Bewegung der Ventilnadel 18 und damit zum Öffnen entgegen der Federkraft einer Rückstellfeder 26 bzw. zum Schließen des Einspritzventils dient der elektromagnetische Kreis mit der Magnetspule 1, dem Kern 2 und einem Anker 27. Der rohrförmige Anker 27 ist mit einem dem Ventilschließkörper 24 abgewandten Ende der Ventilnadel 18 durch beispielsweise eine Schweißnaht fest verbunden und auf den Kern 2 ausgerichtet. In das stromabwärts liegende, dem Kern 2 abgewandte Ende des Ventilsitzträgers 16 ist ein zylinderförmiger Ventilsitzkörper 29, der einen festen Ventilsitz 30 aufweist, durch Schweißen dicht montiert.

Der kugelförmige Ventilschließkörper 24 der Ventilnadel 18 wirkt mit dem sich in Strömungsrichtung kegelstumpfförmig verjüngenden Ventilsitz 30 des Ventilsitzkörpers 29 zusammen. An seiner unteren Stirnseite ist der Ventilsitzkörper 29 mit einer beispielsweise topfförmig ausgebildeten Spritzlochscheibe 34 fest und dicht durch eine z. B. mittels eines Lasers ausgebildete Schweißnaht verbunden. In der Spritzlochscheibe 34 sind wenigstens eine, beispielsweise vier durch Erodieren oder Stanzen ausgeformte Abspritzöffnungen 39 vorgesehen.

Um den Magnetfluss zur optimalen Betätigung des Ankers 27 bei Bestromung der Magnetspule 1 und damit zum sicheren und genauen Öffnen und Schließen des Ventils zu dem Anker 27 zu leiten, ist die Magnetspule 1 von wenigstens einem, beispielsweise als Bügel ausgebildeten und als ferromagnetisches Element dienenden Leitelement 45 umgeben, das die Magnetspule 1 in Umfangsrichtung wenigstens teilweise umgibt sowie mit seinem einen Ende an dem Kern 2 und seinem anderen Ende an dem Ventilsitzträger 16 anliegt und mit diesen z. B. durch Schweißen, Löten bzw. Kleben verbindbar ist. Ein inneres metallenes Ventilrohr als Grundgerüst und damit auch Gehäuse des Brennstoffeinspritzventils bilden der Kern 2, das nichtmagnetische Zwischenteil 12 und der Ventilsitzträger 16, die fest miteinander verbunden sind und sich insgesamt über die gesamte Länge des Brennstoffeinspritzventils erstrecken. Alle weiteren Funktionsgruppen des Ventils sind innerhalb oder um das Ventilrohr herum angeordnet. Bei dieser Anordnung des Ventilrohrs handelt es sich um den klassischen dreiteiligen Aufbau eines Gehäuses für ein elektromagnetisch betätigbares Aggregat, wie ein Ventil, mit zwei ferromagnetischen bzw. magnetisierbaren Gehäusebereichen, die zur wirkungsvollen Leitung der Magnetkreislinien im Bereich des Ankers 27 mittels eines nichtmagnetischen Zwischenteils 12 magnetisch voneinander getrennt oder zumindest über eine magnetische Drosselstelle miteinander verbunden sind.

Das Einspritzventil ist weitgehend mit einer Kunststoffumspritzung 51 umschlossen, die sich vom Kern 2 ausgehend in axialer Richtung über die Magnetspule 1 und das wenigstens eine Leitelement 45 bis zum Ventilsitzträger 16 erstreckt, wobei das wenigstens eine Leitelement 45 vollständig axial und in Umfangsrichtung überdeckt ist. Zu dieser Kunststoffumspritzung 51 gehört beispielsweise ein mitangespritzter elektrischer Anschlussstecker 52.

Mit den in den Figuren 7 bis 9 schematisch angedeuteten Verfahrensschritten des erfindungsgemäßen Verfahrens zur Herstellung eines festen Gehäuses ist es in vorteilhafter Weise möglich, besonders einfach und kostengünstig dünnwandige Gehäuse 66 für verschiedenste Einsatzzwecke, u.a. bevorzugt für elektromagnetisch betätigbare Ventile herzustellen, die ein oben beschriebenes dreiteiliges Ventilrohr ersetzen können.

In einem ersten Verfahrensschritt des Beispiels gemäß Figuren 2-6 (Figur 2) wird ein z.B. zylinderförmiger Grundkörper 55 bereitgestellt, aus dem das Gehäuse 66 gefertigt werden soll und der aus einem magnetischen bzw. magnetisierbaren Material besteht und z.B. ferromagnetisch ist oder ein ferritisches oder ein martensitisches Materialgefüge aufweist. Der Grundkörper 55 kann vorerst massiv ausgebildet sein und beispielsweise für eine besonders effektive Herstellung vieler Gehäuse 66 aus langem Stangenmaterial gewonnen werden. Zum Einstellen lokaler magnetischer Eigenschaften wird in einem Teilbereich des Grundkörpers 55 eine Wärmebehandlung vorgenommen, bei der Kohlenstoff und/oder Stickstoff einzeln oder in Kombination in das Material des Grundkörpers 55 diffundiert. Um nur in einem kleinen ausgewählten Bereich eine Veränderung der Magneteigenschaften zu erreichen, ist der Restbereich des Grundkörpers 55 mit einer z.B. zweiteiligen topfförmigen Abdeckung 57 versehen. Die Abdeckung 57 schützt den Grundkörper 55 vor dem Eindiffundieren von Kohlenstoff und/oder Stickstoff außerhalb der zu behandelnden Diffundierzone 58. Das Aufsticken oder Aufkohlen des Grundkörpers 55 im Bereich der Diffundierzone 58 erfolgt durch das Einbringen des Grundkörpers 55 in eine C- bzw. N-haltige Umgebung 59, und zwar so lange, bis ein nichtmagnetisierbares, insbesondere austenitisches Gefüge in der Diffundierzone 58 entsteht. Bei hohen Temperaturen oder plasmainduziert diffundieren Kohlenstoff- bzw. Stickstoffmoleküle in die Randschicht des magnetischen Werkstoffs ein.

Die Abdeckung 57 der nicht zu beeinflussenden Bereiche des Grundkörpers 55 kann, wie in Figur 2 gezeigt, mittels einer mechanischen Schutz-Abdeckung erfolgen, aber auch mittels einer Beschichtung, z.B. mittels einer Wärmeschutzpaste, oder dem Material des Grundkörpers 55 selbst, das erfindungsgemäß dazu geeignet konturiert wird (Figuren 7 bis 9).

Die z.B. in dem mittleren Bereich des Grundkörpers 55 entstehende Diffundierzone 58 stellt letztlich den Bereich der magnetischen Trennung dar, wie Figur 3 verdeutlicht.

Durch das Eindiffundieren von Kohlenstoff und/oder Stickstoff in den Grundkörper 55 entstehen drei längsgerichtete Zonen, die jeweils unmittelbar aufeinanderfolgend aufgrund der Wärmebehandlung in Verbindung mit der Zugabe von Kohlenstoff und/oder Stickstoff unterschiedliche Magneteigenschaften aufweisen. Dabei weisen die beiden äußeren Zonen des Grundkörpers 55 die gleichen Magneteigenschaften auf, während die mittlere Diffundierzone 58 ein nichtmagnetisierbares oder ein schlecht magnetisierbares, insbesondere austenitisches oder teilaustenitisches Materialgefüge mit keiner oder nur sehr geringer Sättigungsmagnetisierung annimmt und magnetisch von den beiden äußeren Zonen getrennt ist (Figuren 4 und 6).

Während in den massiven Grundkörper 55 z.B. erst nach der Wärmebehandlung mit lokalem Aufsticken und/oder Aufkohlen eine innere Längsöffnung 60 zur Bildung eines rohrförmigen Gehäuses 66 eingebracht wird (Figuren 3 und 4), ist es ebenso denkbar, einen bereits rohrförmigen Grundkörper 55 mit einer inneren Längsöffnung 60 als Ausgangsrohling zu nehmen und diesen dann lokal mit einer Diffundierzone 58 an einer gewünschten Stelle zu versehen (Figuren 5 und 6). Bei einem bereits vor der Wärmebehandlung rohrförmig vorliegenden Grundkörper 55 ergibt sich der Vorteil einer möglichen Diffusion des austenitstabilisierenden Elements C und/oder N von der Außen- und Innenwand des Grundkörpers 55 aus.

Wie bereits erwähnt, kann die Abdeckung 57 durch das Material des Grundkörpers 55 selbst gebildet werden, der dazu geeignet konturiert sein muss. Anhand der Figuren 7 bis 9 wird erläutert, wie eine solche Kontur des Grundkörpers 55 aussehen kann. Im Bereich der später gewünschten Diffundierzone 58 ist beispielsweise eine umlaufende nut- bzw. einstichähnliche Vertiefung 62 vorgesehen, wobei der Grundkörper 55 einen größeren Außendurchmesser aufweist als das später aus ihm hergestellte Gehäuse 66. Dieser Grundkörper 55 wird nun durchgängig in einer C- bzw. N-haltigen Umgebung 59 in seiner Randzone 63 magnetisch beeinflusst. Nach der Wärmebehandlung wird der Grundkörper 55 nachbearbeitet, indem die Randzone 63 weitgehend bis auf die Vertiefung 62 abgetragen wird. Dies kann z.B. mit bekannten mechanischen oder nichtmechanischen Verfahren des Abtragens, wie Fräsen, Schleifen, thermisches Abtragen durch Elektroerosion, Elektronenstrahl oder Laserstrahl, elektrochemisches Abtragen (ECM, Ätzen) oder chemisches Abtragen erfolgen. Wie Figur 9 zeigt, wird das Abtragen der Randzone 63 so lange vollführt, bis ein Gehäuse 66 vorliegt, das ausschließlich in einem gewünschten Bereich mit veränderten Magneteigenschaften die Diffundierzone 58 aufweist. Die Materialdicken sind nicht maßstäblich gezeigt.

Auch hier kann in den massiven Grundkörper 55 entweder vor oder erst nach der Wärmebehandlung mit lokalem Aufsticken und/oder Aufkohlen eine innere Längsöffnung 60 zur Bildung eines rohrförmigen Gehäuses 66 eingebracht werden.

Vor dem Einbau des Gehäuses 66 in einem Ventil oder anderen Aggregat wird das Gehäuse 66 einer Endbearbeitung unterzogen, um das feste Gehäuse 66 in einer gewünschten Geometrie vorliegen zu haben. Im Falle eines Einsatzes eines erfindungsgemäß hergestellten Gehäuses 66 in einem Brennstoffeinspritzventil kann es von Vorteil sein, das Gehäuse 66 durch fertigungstechnische Maßnahmen wie Abstrecken, Rollieren, Rundkneten, Bördeln und/oder Auftulpen spezifisch auszuformen. Mit dem Gehäuse 66 liegt ein Bauteil vor, das in einem bekannten Brennstoffeinspritzventil gemäß Figur 1 die Summe der Funktionen des Ventilrohrs bestehend aus Kern 2, Zwischenteil 12 und Ventilsitzträger 16 komplett übernehmen kann und sich somit auch beispielsweise über die gesamte axiale Länge eines Brennstoffeinspritzventils erstreckt.

Figur 10 zeigt einen schematischen Ausschnitt aus einem Brennstoffeinspritzventil mit einem erfindungsgemäß hergestellten Gehäuse 66, das als dünnwandige Hülse im Ventil verbaut ist und dabei den Kern 2 und den Anker 27 radial und in Umfangsrichtung umgibt und dabei selbst von der Magnetspule 1 umgeben ist. Es wird deutlich, dass der in seinen Magneteigenschaften veränderte und z.B. austenitische Bereich der Diffundierzone 58 des Gehäuses 66 im axialen Erstreckungsbereich eines Arbeitsluftspaltes 70 zwischen dem Kern 2 und dem Anker 27 liegt, um die Magnetkreislinien optimal und effektiv im Magnetkreis zu leiten. Anstelle des in Figur 1 gezeigten bügelförmigen Leitelements 45 ist das äußere Magnetkreisbauteil z.B. als Magnettopf 46 ausgeführt, wobei der magnetische Kreis zwischen dem Magnettopf 46 und dem Gehäuse 66 über ein Deckelelement 47 geschlossen ist. Das erfindungsgemäße Verfahren ermöglicht es auch, Gehäuse 66 mit größeren Wanddicken in ihren Magneteigenschaften lokal zu verändern, so dass eine höhere Innendruckbeständigkeit bei trotzdem minimiertem magnetisch aktiven Bereich zugunsten der Magnetkraft gewährleistet ist.

Die Erfindung ist keinesfalls auf den Einsatz in Brennstoffeinspritzventilen oder Magnetventilen für Antiblockiersysteme beschränkt, sondern betrifft alle elektromagnetisch betätigbaren Ventile unterschiedlicher Anwendungsgebiete und allgemein alle festen Gehäuse in Aggregaten, bei denen Zonen unterschiedlichen Magnetismus aufeinanderfolgend erforderlich sind. Auf die erfindungsgemäße Weise sind nicht nur Gehäuse 66 mit drei aufeinander folgenden Zonen herstellbar, sondern auch Gehäuse 66 mit mehr als drei Zonen.

## Patentansprüche

1. Verfahren zur Herstellung eines festen Gehäuses (66), insbesondere eines Ventilgehäuses für ein elektromagnetisch betätigbares Ventil,
wobei das Gehäuse (66) wenigstens drei Zonen besitzt und jeweils zwei unmittelbar aufeinander folgende Zonen unterschiedliche Magneteigenschaften aufweisen,
mit den Verfahrensschritten:
a) Bereitstellen eines Grundkörpers (55) aus einem magnetischen bzw. magnetisierbaren Material,
b) Aufkohlen und/oder Aufsticken wenigstens eines Teilbereichs des Grundkörpers (55) durch Eindiffundieren von Kohlenstoff und/oder Stickstoff unter Wärmebehandlung zur Bildung eines nichtmagnetisierbaren Gefüges,
wobei der Grundkörper (55) derart mit einer nutähnlichen Vertiefung (62) konturiert wird, dass das Aufkohlen und/oder Aufsticken durchgängig am Grundkörper (55) erfolgt und so eine vollständig magnetisch beeinflusste Randzone (63) entsteht,
c) Abtragen der Randzone (63) am Grundkörper (55) derart, dass an der Stelle der nutähnlichen Vertiefung (62) des Grundkörpers (55) nach dem Abtragen der Randzone (63) ausschließlich eine lokale Diffundierzone (58) verbleibt, und
d) Endbearbeitung des so entstandenen Grundkörpers (55) bis zum Erreichen einer gewünschten Geometrie des Gehäuses (66).

2. Verfahren nach Anspruch 1, **dadurch gekennzeichnet, dass** der Grundkörper (55) ferromagnetisch ist oder ein ferritisches oder ein martensitisches Materialgefüge aufweist.

3. Verfahren nach Anspruch 1 oder 2, **dadurch gekennzeichnet, dass** der Grundkörper (55) zylindrisch bereitgestellt wird.

4. Verfahren nach Anspruch 3, **dadurch gekennzeichnet, dass** der Grundkörper (55) massiv vollzylindrisch oder mit einer inneren Längsöffnung (60) hohlzylindrisch vor der Wärmebehandlung und der Änderung der Magneteigenschaften bereitgestellt wird.

5. Verfahren nach einem der vorhergehenden Ansprüche, **dadurch gekennzeichnet, dass** die Endbearbeitung des Grundkörpers (55) mittels Abstrecken, Rollieren, Rundkneten, Bördeln und/oder Auftulpen erfolgt.

## Claims

1. Method for producing a rigid housing (66), in particular a valve housing for an electromagnetically actuable valve,
wherein the housing (66) has at least three zones and in each case two directly successive zones have different magnetic properties,
said method comprising the following steps:
a) a base body (55) made from a magnetic or magnetizable material is provided,
b) at least a partial region of the base body (55) is carburized and/or nitrided by the diffusion of carbon and/or nitrogen with heat treatment in order to form a non-magnetizable microstructure,
wherein the base body (55) is contoured with a groove-like depression (62) in such a manner that the carburization and/or nitriding is effected continuously on the base body (55) and a completely magnetically influenced edge zone (63) is thereby formed,
c) material is removed from the edge zone (63) on the base body (55) in such a manner that exclusively one local diffusion zone (58) remains at the site of the groove-like depression (62) of the base body (55) after the material has been removed from the edge zone (63), and
d) the base body (55) thereby obtained is subjected to final machining until a desired geometry of the housing (66) is obtained.

2. Method according to Claim 1, **characterized in that** the base body (55) is ferromagnetic or has a ferritic or a martensitic material microstructure.

3. Method according to Claim 1 or 2, **characterized in that** the base body (55) is provided in cylindrical form.

4. Method according to Claim 3, **characterized in that** the base body (55) is provided in the form of a solid cylinder or in the form of a hollow cylinder with an inner longitudinal opening (60) before the heat treatment and the change in the magnetic properties.

5. Method according to one of the preceding claims, **characterized in that** the base body (55) is subjected to final machining by means of ironing, tumbling, swaging, beading and/or flaring.

## Revendications

1. Procédé pour fabriquer un boîtier rigide (66), en particulier un boîtier de soupape pour une soupape à commande électromagnétique, le boîtier (66) possédant au moins trois zones et à chaque fois deux zones immédiatement successives présentant des propriétés magnétiques différentes,
comprenant les étapes de procédé suivantes :
a) fourniture d'un corps de base (55) en un matériau magnétique ou magnétisable,
b) carburation et/ou nitruration d'au moins une région partielle du corps de base (55) par diffusion de carbone et/ou d'azote et traitement thermique pour former une structure non magnétisable,
le corps de base (55) étant muni d'un contour en forme de renfoncement (62) similaire à une rainure de telle sorte que la carburation et/ou la nitruration s'effectuent en continu sur le corps de base (55) et qu'il se forme ainsi une zone de bord (63) complètement influencée magnétiquement,
c) enlèvement de la zone de bord (63) sur le corps de base (55) de telle sorte qu'il subsiste, à la place du renfoncement (62) similaire à une rainure du corps de base (55), après l'enlèvement de la zone de bord (63), exclusivement une zone de diffusion locale (58), et
d) traitement final du corps de base ainsi formé (55) jusqu'à l'obtention d'une géométrie souhaitée pour le boîtier (66).

2. Procédé selon la revendication 1, **caractérisé en ce que** le corps de base (55) est ferromagnétique ou présente une structure de matériau ferritique ou martensitique.

3. Procédé selon la revendication 1 ou 2, **caractérisé en ce que** le corps de base (55) est fourni sous forme cylindrique.

4. Procédé selon la revendication 3, **caractérisé en ce que** le corps de base (55) est fourni sous forme cylindrique massive ou avec une ouverture longitudinale interne (60) sous forme cylindrique creuse, avant le traitement thermique et la modification des propriétés magnétiques.

5. Procédé selon l'une quelconque des revendications précédentes, **caractérisé en ce que** le traitement final du corps de base (55) s'effectue par étirage, laminage, pétrissage rotatif, bordage et/ou tulipage.
